# EUROPÄISCHE PATENTSCHRIFT

(11) **EP 0 516 972 B1**
(45) Veröffentlichungstag und Bekanntmachung des Hinweises auf die Patenterteilung: **29.11.1995**
(21) Anmeldenummer: 92107272.4
(22) Anmeldetag: 29.04.1992
(51) Int. Cl.: B62D 47/02

(54) **Synchron-Dämpfereinrichtung**
Synchronous damping device
Dispositif d'amortisseur synchrone

(30) Priorität: 06.06.1991 DE 4118612
(43) Veröffentlichungstag der Anmeldung: 09.12.1992
(73) Patentinhaber: MAN Nutzfahrzeuge Aktiengesellschaft, 80976 München (DE)
(72) Erfinder: Gusinde, Heinz, Dipl.-Ing. (FH), W-8061 Weichs (DE); Szabo, Zsolt, Dipl.-Ing. (TU), W-8000 München 40 (DE)

(56) Entgegenhaltungen:
- EP-A- 0 392 177
- EP-A- 0 422 338
- DE-A- 3 904 756

## Beschreibung

Die Erfindung betrifft ein Drehgelenk für Gelenkfahrzeuge, mit einem Knickwinkelstabilisator, einem Faltenbalgträger und einem Drehschemel.

Der Erfindung liegt die Aufgabe zugrunde, einen einfachen, wartungsfreundlichen und in seinem Bauraum platzsparenden Knickwinkelstabilisator für Gelenkomnibusse zu schaffen.

Dies wird erfindungsgemäß durch die im kennzeichnenden Teil des Anspruchs 1 definierten Merkmale erzielt.

Gelenkomnibusse mit Heckmotor und Antrieb auf der Nachläuferachse - sogenannte gedrückte oder geschobene Systeme - benötigen für den Wintereinsatz eine Knickschutzanlage. Darüber hinaus ist für solche Gelenkbuskonzeptionen wegen der besonderen Massenverteilung, insbesondere aber bei höheren Fahrgeschwindigkeiten, aus Stabilitätsgründen eine Dämpfung im Gelenkbereich erforderlich, die ein klappmesserartiges Einknicken verhindert und ebenso schädlichen Schwänzelbewegungen entgegenwirkt.

Der bisher dafür notwendige hydraulische sowie elektronisch-elektrische Steuerungs- und Überwachungsaufwand der bekannten Systeme ist erheblich. Abgesehen von der Störanfälligkeit in den umfangreich installierten elektrischen Anschlüssen und Bauteilen, ist auch eine sehr zeitaufwendige und kostenintensive Einstell- und Abgleichprozedur damit verbunden, die nur von geschultem Fachpersonal vorgenommen werden kann. Die Exporttauglichkeit eines solcherart ausgerüsteten Gelenkomnibusses ist dadurch sehr eingeschränkt.

Es hat sich gezeigt, daß auf aufwendige elektronisch-hydraulische Steuerungen und Funktionsüberwachungen verzichtet werden kann, wenn dem System für den normalen Fahrbetrieb eine hydraulische Dauer-Knickwinkeldämpfung zugeordnet wird, damit eine bestimmte Knickwinkelgeschwindigkeit, abhängig von den jeweiligen Fahrzuständen, nicht überschritten wird. Für den Anfahrvorgang bei winterlichen Straßenverhältnissen mit Schnee- und Eisglätte aus mehr oder weniger stark abgeknickten Fahrzeugstellungen heraus ist es mitunter erforderlich, daß kurzzeitig eine höhere Dämpfung (Konstantdämpfung) mit Druckbegrenzung automatisch über ein vorhandenes Anfahr-Schlupf-Regelsystem (ASR) oder von Hand vom Fahrerplatz aus zugeschaltet werden kann.

Es sind verschiedene Drehgelenksysteme mit Dämpfereinrichtung, mit zwei außenliegenden und großräumig verschwenkbaren Kolbenzylindern bekannt. Die freiliegenden Kolbenstangen sind dabei mechanischen Beschädigungen ausgesetzt. Darüber hinaus ist die Aufnahme von Staub- und Schmutzpartikeln durch die ölbenetzte Kolbenstange kaum zu verhindern. Beides führt zu Dichtungsproblemen, Ölverlust und unerwünschten Funktionsstörungen der gesamten Knickschutzanlage. Der Platzbedarf solcher außenliegender und großräumig verschwenkbarer Kolbenzylinder verhindert außerdem eine technisch saubere und zuverlässige Verlegung der Versorgungsleitungen zwischen dem vorderen und hinteren Fahrzeugteil.

Aus der EP-A-0422338 ist ein hydraulischer Schwingungsdämpfer bekannt, der zwei, in einem zweiteiligen, ölgefluteten Gehäuse im Abstand parallel zueinander angeordnete, doppelwirkende Kolben aufweist, wobei die Zylinderbohrungen einstückig mit dem Gehäuse und die Kolbenstangen als Zahnstangen ausgebildet sind, die über ein in der Gehäusemitte mit einem Gehäuseteil verschraubten Ritzel synchron miteinander verbunden sind und hydraulische und mechanische Endanschläge aufweisen. Die Anwendung und Anordnung dieses hydraulischen Schwingungsdämpfers als Knickwinkelstabilisator in einem Gelenklahrzeug ist jedoch daraus nicht erkennbar.

Aus der DE 33 31 921 A1 und DE 33 40 446 A1 sind Drehgelenke bekannt, die mit sogenannten Drehflügeldämpfern ausgerüstet sind. Drehgelenke dieser Art weisen ein mit einem Fahrzeugteil verbundenes Dämpfergehäuse auf, an dessen Innenwand radial nach innen gerichtete Anschlagstege ausgebildet sind. Diese liegen an einer koaxial im Zylinder angeordneten Welle an, an der radial bis zur Innenwand erstreckende Flügel ausgebildet sind, so daß der zwischen der Innenwand und der Welle gebildete kreisringförmige Hohlraum in, durch die Anschlagstege und Flügel, begrenzte Druckkammern unterteilt ist, die wechselseitig mit einem unter Druck stehenden Fluid der Steuereinrichtung beaufschlagbar sind. Der Fertigungsaufwand dieser Drehflügeldämpfer ist sehr kostenintensiv und die Abdichtung der rechteckigen Drehkörperflächen bereitet erhebliche Probleme. Außerdem ist das Gewicht und der Bauraum erheblich.

Bei der erfindungsgemäßen Verwendung der Synchron-Dämpfereinrichtung als Knickwinkelstabilisator zwischen den Fahrzeugteilen eines mehrgliedrigen Gelenkomnibusses ist die Synchron-Dämpfereinrichtung fest mit endseitigen Längsträgern des vorderen Wagenteils, zwischen diesen versenkt angeordnet, verbunden. Die aus dem Dämpfergehäuse austretende Ritzelwelle ist drehfest mit dem Drehschemel verbunden und zwischen Synchron-Dämpfereinrichtung und Drehschemel ist eine Kugel-Drehverbindung vorgesehen. Solcherart ist die bekannte Synchron-Dämpfereinrichtung als in sich abgeschlossenes hydraulisches System zwischen den Aufnahmeträgern des vorderen Fahrzeugteiles versenkt und somit in der Höhe platzsparend eingebaut. Auf diese Weise wird die Raumfrage optimal gelöst, wodurch sich eine besondere Eignung der Synchron-Dämpfereinrichtung für die Anwendung in den immer mehr gefragten Niederflur-Gelenkomnibussen ergibt. Die beiden in einem gemeinsamen Gehäuse über ein Zahnrad synchronisierten, doppelseitig wirkenden hydraulischen Kolbenzylinder bewegen sich wartungsfrei in einem Ölbad. Außerdem kann, da erfindungsgemäß ein geschlossenes, hydraulisches System vorliegt, auf die Zuführung von Leitungen und außen liegenden Steuerblöcken verzichtet werden, was letztlich ein Minimum an Reparaturanfälligkeit, Funktionsunsicherheit und Ausfallzeit mit sich bringt. Die Synchron-Dämpfereinrichtung kann als hydraulisches System so ausgelegt sein, daß bei normalem Fahrbetrieb eine progressive Dauerknickwinkeldämpfung vorgesehen ist, ein bestimmter Knickwinkel-Geschwindigkeitsbereich eingehalten wird und vor Erreichen der beiden synchron einsetzenden mechanischen Endanschläge im Knickwinkelgrenzbereich auf eine deutlich höhere Konstantdämpfung mit Druckbegrenzung innerhalb des Synchrondämpfers umgeschaltet wird, um die Endanschläge zu entlasten. Sofern jedoch die Knickwinkelgeschwindigkeit einmal bereits vor Erreichen des Knickwinkelgrenzbereichs überschritten werden sollte, kann die progressive Dauerknickwinkeldämpfung sofort in die deutlich höhere Konstantdämpfung übergehen, womit der vordere und nachfolgende Fahrzeugteil zueinander eine spürbare Versteifung erfahren und die drohende Instabilität des Fahrzeuges beseitigt wird. Selbstverständlich gibt es hierzu einsatzbedingte Dämpfungscharakteristiken, die von einer progressiven Kennung mit und ohne Druckbegrenzung bis zum automatischen, mechanischen Übergang auf eine noch höhere Progression oder Konstantdämpfung mit Druckbegrenzung reichen. In schwierigen Anfahrsituationen kann die Konstantdämpfung automatisch aktiviert werden, in dem sie direkt über eine vorhandene Anfahr-Schlupf-Regelung (ASR) mitgeregeltwird.

Bei Fahrzeugen ohne ABS/ASR-Regelung oder auch getrennt davon, besteht die Möglichkeit, die Konstantdämpfung bei Bedarf vom Fahrerplatz aus, und wenn es die Anfahrsituation erfordert, bei jeder Knickwinkelstellung des Fahrzeuges von Hand zu schalten. Dieses Umschalten auf Konstantdämpfung erfolgt bei Fahrzeugen mit ABS/ASR-Regelung elektro-pneumatisch, bei Handbetätigung auch rein pneumatisch.

Nach einem weiteren Merkmal der Erfindung weist der Drehschemel an beiden Seiten gegenüber seinem mittleren Teil hochgesetzte Aufnahmeaugen für die gelenkige Anbindung des hinteren Fahrzeugteils auf. Weiterhin ist ein Faltenbalgträger mit geringem Höhenabstand zu den Aufnahmeaugen über Mitte Drehschemel und quer zur Fahrtrichtung angeordnet, wobei der so entstandene freie unzerklüftete Raum über Mitte Drehschemel für den freien Durchgang der Versorgungsleitungen vorgesehen ist. Solcherart ist eine elegante Verlegung der Versorgungsleitungen über die Längsmittelebene des Fahrzeuges möglich, wodurch die Versorgungsleitungen wiederum keinen großen Bewegungen und somit Verschleiß ausgesetztsind.

Die Erfindung ist in einem Ausführungsbeispiel dargestellt und beschrieben.

Es zeigen:
- Fig. 1: eine Seitenansicht einer Drehgelenkeinheit mit Synchron-Dämpfereinrichtung an einem Gelenkbus,
- Fig. 2: eine Draufsicht einer Drehgelenkeinheit mit Synchrondämpfereinrichtung an einem Gelenkomnibus,
- Fig. 3: eine Teilansicht in Fahrtrichtung einer Drehgelenkeinheit mit Synchron-Dämpfereinrichtung an einem Gelenkomnibus.

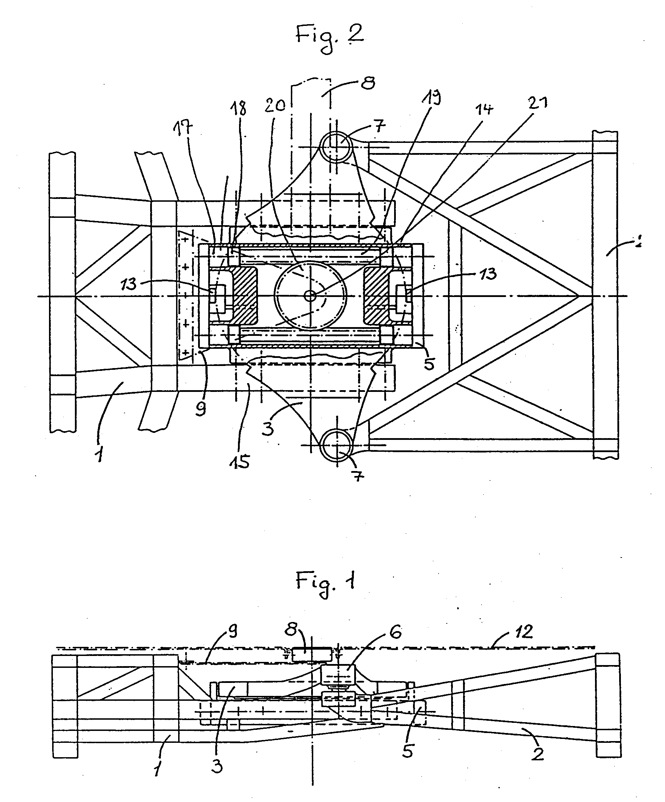

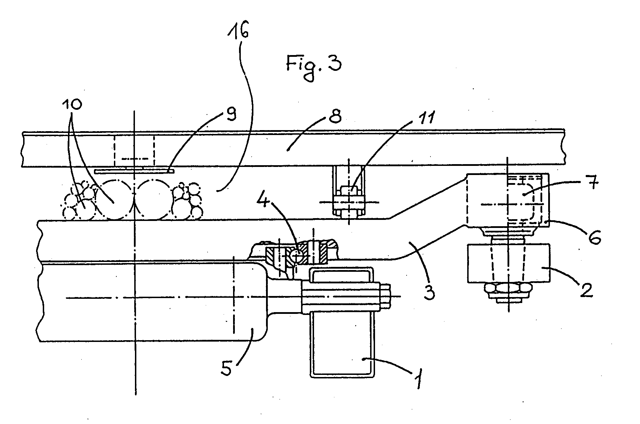

Die Figuren 1, 2 und 3 zeigen die beiden Fahrzeugteile 1 und 2, nämlich den Vorderwagen und den Nachläufer eines Gelenkbusses. Die beiden Fahrzeugteile 1, 2 sind über einen Drehschemel 3, eine Kugeldrehverbindung 4 und eine Synchron-Dämpfereinheit 5 miteinander verbunden. Die Sychron-Dämpfereinrichtung 5 besteht aus einem Dämpfergehäuse 14, das öldicht gekapselt ist, zwei im Abstand zueinander angeordneten parallel verlaufenden, verzahnten Kolbenstangen 19, deren Kolben 18 in den einstückig mit dem Gehäuse verbundenen Zylinderbohrungen 17 geführt sind. Die beiden Kolbenstangen 19 sind über ein Ritzel 20 miteinander verbunden und synchronisiert. Die mit dem Ritzel 20 verbundene Ritzelwelle 21 wird aus dem Dämpfergehäuse 14 herausgeführt und ist drehfest mit dem Drehschemel 3 verbunden. An den Gehäuseenden sind innerhalb des Gehäuses mechanische und hydraulische Endanschläge 13 vorgesehen.

Die Synchron-Dämpfereinrichtung 5 ist versenkt zwischen den Längsträgern 15 des Fahrzeugteils angebracht und fest mit diesen verbunden. Am Drehschemel 3 sind, seitlich ausladend, hochgesetzte Aufnahmeaugen 6 angebracht, die über Lager 7 mit dem Nachläufer 2 in Verbindung stehen. Ein Faltenbalgträger 8 wird vom Vorderteil 1 durch einen Dreiecklenker 9 im Drehpunkt über dem Drehschemel 3 zentrisch geführt, so daß für die Versorgungsleitungen 10 zwischen dem Faltenbalgträger 8 und dem Drehschemel 3 ein freier Durchgang 16 für die Versorgungsleitungen 10 entsteht. Die vertikale Abstützung des Faltenbalgträgers 8 erfolgt über zwei Laufrollen 11, die auf dem ebenen Teil des Drehschemels 3 in der Nähe der ausladend und hochgesetzten Aufnahmeaugen 6 abrollen können. Der vertikale Abstand zwischen dem Gelenklager 7 und der am Faltenbalgträger 8 anscharnierten Drehscheibenhälften 12 ist extrem klein, wodurch die Horizontalverschiebung der nachläuferseitigen Drehscheibenhälfte 12 bei vertikalen Knickbewegungen des Fahrzeugs ebenfalls klein bleibt.

Die Wirkungsweise der Synchron-Dämpfereinrichtung 5 ist derart, daß einer bestimmten Knickwinkelgeschwindigkeit ein bestimmter maximaler Druck in der Progressivität zugeordnet ist. Diese Regelung erfolgt automatisch über eine im Inneren der Synchron-Dämpfereinrichtung angeordneten Drossel mit Druckbegrenzungsventil. In den Knickwinkel-Endlagen wird automatisch über ein im Inneren der Synchron-Knickwinkeldämpfereinrichtung angeordnetes Sitzventil ein Konstantdruck geschaltet, der über ein Druckbegrenzungsventil einen bestimmten Maximaldruck zuläßt und unabhängig von der Knickwinkelgeschwindigkeit wirksam wird, um den nachfolgenden hydraulischen und mechanischen Endanschlag 13 zu entlasten. Dieser Konstantdruck kann aber auch jederzeit und bei jeder Knickwinkelstellung vom Fahrerplatz aus eingeschaltet werden. Weitere Arten der Progressivdämpfung, z.B. in unterschiedlich progressiven Intervallen, sind denkbar.

### Bezugszeichenliste

- 1: Fahrzeugteil (Vorderwagen)
- 2: Fahrzeugteil (Nachläufer)
- 3: Drehschemel
- 4: Kugeldrehverbindung
- 5: Synchron-Dämpfereinrichtung
- 6: hochgesetzte Aufnahmeaugen
- 7: Gelenklager
- 8: Faltenbalgträger
- 9: Dreieckslenker
- 10: Versorgungsleitungen
- 11: Laufrollen
- 12: Drehscheiben
- 13: hydraulische und mechanische Anschläge
- 14: Dämpfergehäuse
- 15: Längsträger
- 16: freier Raum
- 17: Zylinderbohrungen
- 18: Kolben
- 19: verzahnte Kolbenstangen
- 20: Ritzel
- 21: Ritzelwelle

## Patentansprüche

1. Drehgelenk für Gelenkfahrzeuge, mit einem Knickwinkelstabilisator, einem Faltenbalgträger und einem Drehschemel (3),
dadurch gekennzeichnet, daß im Drehgelenk als Knickwinkelstabilisator eine an sich bekannte Synchron-Dämpfereinrichtung verwendet wird, die zwei, in einem geschlossenen, ölgefluteten Gehäuse (14) im Abstand parallel zueinander angeordnete, doppelwirkende Kolben (18) aufweist, wobei die Zylinderbohrungen (17) einstückig mit dem Gehäuse sind und die Kolbenstangen (19) als Zahnstangen ausgebildet sind, die über ein in der Gehäusemitte fest mit Drehschemel verbundenes und zusammen mit diesem drehbares Ritzel (20) miteinander synchronisiert sind und hydraulische und mechanische Endanschläge (13) vorgesehen sind, und daß der Faltenbalgträger (8) mit Höhenabstand über der Mitte des Drehschemels (3) und quer zur Fahrtrichtung derart angeordnet ist, daß ein freier, unzerklüfteter Raum (16) über der Mitte des Drehschemels (3) für den freien Durchgang von Versorgungsleitungen (10) entsteht.

2. Drehgelenk nach Anspruch 1, dadurch gekennzeichnet, daß der Falkenbalgträger (8) über Laufrollen (11) auf dem Drehschemel (3) in dessen äußeren Bereich abgestützt ist.

3. Drehgelenk nach Anspruch 1 oder 2, dadurch gekennzeichnet, daß der Drehschemel (3) an beiden Seiten gegenüber seinem mittleren Teil hochgesetzte Aufnahmeaugen (6) für die gelenkige Anbindung des hinteren Fahrzeugteiles (2) aufweist, und daß der Falkenbalgträger (8) mit geringem Höhenabstand zu den Aufnahmeaugen (6) angeordnet ist.

## Claims

1. Swivel joint for articulated vehicles, with an articulation stabiliser, a concertina section carrier and a pivot plate (3), characterised in that a synchronous damping device is used as an anti-jackknife stabiliser in the swivel joint, which synchronous damping device is, as such, well known and equipped with two double-acting pistons (18) located in a closed, oil-flooded housing (14) and arranged parallel to each other at a distance, the cylinder bores (17) forming one piece with the housing and the piston rods (19) being designed as toothed racks synchronised with each other via a pinion (20) that is located in the housing centre, firmly connected with the pivot plate and turnable with said pivot plate, that hydraulic and mechanical end stops (13) are provided, and that the concertina section carrier (8) is arranged at a vertical distance above the centre of the pivot plate (3) and at right angles to the driving direction so that a free, non-rugged space (16) is created above the centre of the pivot plate (3) for the clear passage of supply lines (10).

2. Swivel joint according to Claim 1, characterised in that the concertina section carrier (8) is supported via rollers (11) on the pivot plate (3) in the outer area of the latter.

3. Swivel joint according to Claim 1 or 2, characterised in that the pivot plate (3) is equipped on both sides with support eyes (6) higher than its centre part for connecting up the rear part of the vehicle (2) by means of a joint, and that the concertina section carrier (8) is arranged at a slight distance above the support eyes (6).

## Revendications

1. Articulation de rotation pour véhicule articulé comportant un stabilisateur d'angle de flexion, un support de soufflet et un plateau tournant (3), caractérisée en ce que, dans l'articulation de rotation, le stabilisateur d'angle de flexion utilise une installation d'amortissement synchrone connue en soi, ayant deux piston (18) à double effet, parallèles l'un à l'autre et à une certaine distance, dans un boîtier (14), fermé, baigné dans de l'huile, les alésages (17) des cylindres faisant corps avec le boîtier et les tiges de piston (19) étant des tiges dentées qui sont synchronisées par un pignon (20) situé au milieu du boîtier, en étant relié solidairement au plateau tournant, et des butées de fin de course (13) hydrauliques et mécaniques et le support de soufflet (8) est situé à une certaine distance en hauteur au-dessus du milieu du plateau tournant (3), transversalement à sa direction de déplacement, pour laisser un volume libre (16) non encastré au-dessus du milieu du plateau tournant (3) pour le libre accès aux conduites d'alimentation (10).

2. Articulation selon la revendication 1, caractérisée en ce que le support de soufflet (8) s'appuie sur le plateau tournant (3) par des galets (11) au niveau de la zone extérieure du plateau.

3. Articulation selon la revendications 1 ou 2, caractérisée en, ce que le plateau tournant (3) comporte des oeillets de réception (6) relevés des deux côtés, par rapport à sa partie médiane pour être relié de manière articulée à la partie arrière (2) du véhicule et le support de soufflet (8) se trouve à une faible hauteur par rapport aux oeillets de réception (6).
